# EUROPEAN PATENT SPECIFICATION

(11) **EP 3 591 299 B1**
(45) Date of publication and mention of the grant of the patent: **03.03.2021**
(21) Application number: 19183529.7
(22) Date of filing: 01.07.2019
(51) Int. Cl.: F24D 10/00, F24D 11/00, F24D 19/10

(54) **ADAPTIV ENERGY TRANSFER**
ADAPTIVE ENERGIEÜBERTRAGUNG
TRANSFERT D'ÉNERGIE ADAPTATIF

(30) Priority: 02.07.2018 DK PA201800313
(43) Date of publication of application: 08.01.2020
(73) Proprietor: Danfoss A/S, 6430 Nordborg (DK)
(72) Inventor: SEERUP, Jørgen, 6430 Nordborg (DK); LARSEN, Jørn Dalgård, 6430 Nordborg (DK); CHRISTENSEN, Svend Jørgen Kjærulff, 6430 Nordborg (DK)
(74) Representative: Stevens, Brian

(56) References cited:
- EP-A1- 3 217 114
- WO-A1-2009/157629
- DE-A1- 19 538 601
- DE-A1- 19 907 509

## Description

### BACKGROUND

Thermal storages may be formed as a tank with a heated fluid, such as water. Since heat moves upwards the storage typically has a gradual increasing temperature from the bottom towards the top, and thus comprises what can be referred to as a cold section, which typically is at the lower part, and a hot section, which typically is at the upper part. The thermal energy stored may be from a range of different sources, e.g. waste heat from cooling devices like refrigerators and freezers, surplus return heat, solar devices, boilers, etc

The stored thermal energy then could be feed into a heating and/or cooling system, such as when the temperature in the hot section is higher than the supplied temperature in e.g. district heating. The pressures in such systems may however fluctuate significantly, which therefore would require a high pumping pressure to feed fluid heated with energy from the thermal storage into the heating and/or cooling system, to ensure the pumping pressure is higher than the pressure in system. Otherwise there rather would be a 'back flow' from the heating and/or cooling system. Having a high pumping pressure however would also increase the power consumption and thus the gain by transferring thermal energy from the thermal storage A heating and/or cooling system and method according to the preamble of claim 1 and claim 6 are known from patent DE195 38 610 A1.

### SUMMARY OF THE INVENTION

The objects are solved according to the features of the claims.

The flow responsive regulator may be a check valve and / or the flow sensor is a flow switch.

A first pump is according to the invention connected to the fluid connection and is adapted to circulate fluid from the cold line, through the first flow path, and to the hot line, and where a second pump is connected to the second fluid connection adapted to circulate fluid between the second path and the thermal storage.

The flow sensor may be in data exchange communication to a control of said a first pump, wherein said control is adapted gradually to increase the pumping pressure when no flow is registered by the flow sensor until a flow is registered. In an embodiment, said registered flow is inserted as a basis for the minimum pumping pressure allowed, P1_{min,}, of the first pump.

The second pump may be controlled in dependence on the measured temperature, T_{heat,} of the fluid having been heated in the heat exchanger.

The present system also introduces a method of feeding thermal energy in a thermal storage to a heating and/or cooling system, said heating and/or cooling system comprising a fluid connection connected to a heat exchanger such that
- a supply hot line in fluid connection with an outlet of the second flow path of a heat exchanger,
- a cold line in fluid connection with an inlet of the second flow path of the heat exchanger,
   said thermal storage being in second fluid connection with an inlet and outlet of a first flow path of the heat exchanger,
   said method comprising the step of registering if there is a flow in the fluid connection, and if no flow is registered to ramp up a first pumping pressure, P1, of a first pump connected to drive said flow in said fluid connection, until a flow is registered.

In an embodiment, if the pressure in the cold line, P_{cold,} exceeds a defined lowest possible pumping pressure allowed, P1_{min, old}, then an initialization procedure is started, where a ramp up of increases of the first pumping signal, S1, is continued until a flow is registered by the flow sensor. The updated lowest possible pumping pressure allowed, P1_{min, new}, may be the sum of the first pump pressure P1 when the flow is registered plus an additional delta pressure, ΔP1ₘᵢₙ, or correspondingly, an additional delta first setting signal ΔS1ₘᵢₙ.

In an embodiment a second pump is controlled in dependence of a temperature, T_{heat,} in said fluid connection, where said second pump is connected to the second fluid connection adapted to circulate fluid between the first path and the thermal storage.

The second pump may be controlled by a regulation dependence T_{heat,} by a feedback control like PI or PI(D) to maintain Tₕₑₐₜ at a defined level.

The second pump in an embodiment is set to operate with a setting, S2, being between a minimum second setting signal S2,ₘᵢₙ and a maximum second setting signal S2,ₘₐₓ, such that if the second pumping setting, S2, gets within a defined distance of the minimum second setting signal, S_{2,min}, or maximum second setting signal, S_{2,max}, then the first setting, S1, of the first pump is increased, or respectively decreased, to a level respecting the P1min and P1max setting.

### FIGURES

- Fig. 1: A heating and/or cooling system according to a first embodiment of the present invention with a thermal storage.
- Fig. 2: A heating and/or cooling system according to a second embodiment of the present invention with a thermal storage.
- Fig. 3: A heating and/or cooling system according to a third embodiment of the present invention with a thermal storage.
- Fig. 4A,B: A ramp up procedure to find a lowest required pumping pressure.
- Fig. 5: Illustration of a basic pumping pressure control relation of the a first pump to temperature in a thermal storage, and a control of a second pumping pressure.

### DETAILED DESCRIPTION OF THE INVENTION

It should be understood, that the detailed description and specific examples, while indicating embodiments of the invention, are given by way of illustration only, since various changes and modifications within the spirit and scope of the invention will become apparent to those skilled in the art from the detailed description.

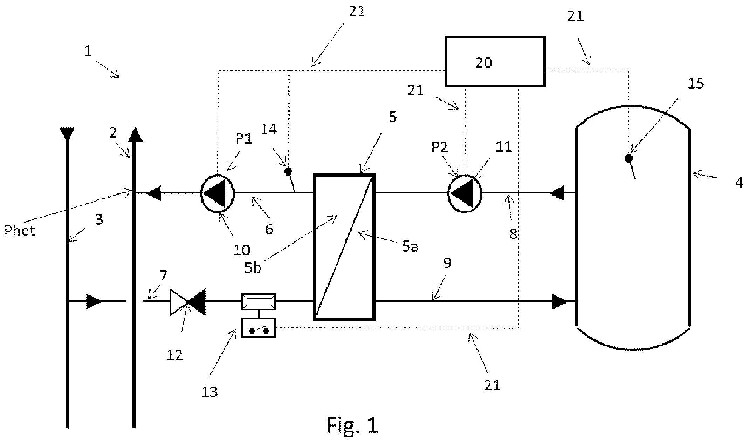

Fig. 1 illustrate a basic embodiment of a heating and/or cooling system (1) according to the present invention. In the following description of the invention a heating system is used as an example, but any of the embodiments would also apply to a cooling system, or a combined cooling and heating system. The system (1) includes a supply hot line (2) feeding heating fluid from a thermal supply to consuming devices (neither is shown), and a cold line (3) for returning the heating fluid after use. This e.g. could be a classic district heating system, boiler system, a HVAC etc.

A heat exchanger (5) with a first flow path (5a) (also referred to as its primary side) and a second flow path (5b) (also referred to as its secondary side) is positioned intermediate the lines (2, 3) and a thermal storage (4). In an embodiment the thermal storage (4) is a tank, or container, with a fluid such as water being heated, e.g. by a solar system, by heat recovery or any other means. Since heat moves upwards the thermal storage (4) typically has a gradual increasing temperature from the bottom towards the top, and in the following, without loss of generality, the thermal storage (4) will be referred to as having a cold section, which typically is at the lower part, and a hot section, which typically is at the upper part.

A first fluid connection (6, 7) connects the lines (2, 3) to the second flow path (5b) of the heat exchanger (5) such that the cold line (3) is in fluid connection (7) with an inlet of the second flow path (5b) and the supply hot line (2) is in fluid connection (6) with an outlet of a second flow path (5b). A first pump (10) is connected to one of the fluid connections (6, 7) to promote the flow, and may be capable of being controlled within a 0-100% control signal, where 0% means no pumping and 100% means operating at its maximum.

The thermal storage (4) is in fluid connection (8,9) with an inlet and outlet of the first flow path (5a), such that a hot section of the thermal storage (4) is connected to an inlet of the first flow path (5a) by fluid connection (8), and a cold section of the thermal storage (4) to an outlet of the thermal storage (4) by fluid connection (9). This ensures that hot fluid from the hot section can be directed by connection (8) as input to the first flow path (5a) where it transfers thermal energy to the heating fluid flowing in the second flow path (5b). The thereby cooled fluid then is directed via the outlet of the first flow path (5a) through connection (9) to a cold section. A second pump (11) is connected to one of the fluid connections (8, 9) to promote this flow, and may be capable of being controlled within a 0-100% control signal, where 0% means no pumping and 100% means operating at its maximum.

In the illustrated embodiment, a first temperature sensor (14) is connected to the fluid connection (6) between the hot line (2) and second path (5b) outlet, and measures the temperature Tₕₑₐₜ of the fluid having been heated in the heat exchanger (5). In other embodiments it may be positioned elsewhere, such as to measure the heated fluid being feed to one or both of the lines (2, 3). A fraction of the fluid in the cold line (3) thus is recirculated back to the hot water line (2) after heat, or thermal energy, has been transferred from the thermal storage (4) to the fluid in the heat exchanger (5). Further, a possible second temperature sensor (15) is connected to said thermal storage (4) measuring the storage temperature, Tₛₜₒᵣ, such as in the hot section.

A flow responsive regulator (12) is connected to either of the fluid connections (6, 7) connecting the hot line (2) or cold line (3) to the second flow path (5b), such as illustrated to the fluid connection (7). The flow responsive regulator (12) is adapted only to pass through flow in one direction, which in the illustrated embodiment is in the direction from the cold line (3) to the hot line (2). Further included is a flow sensor (13) sensing when there is a flow in said first fluid connection (6, 7). In other words, if the pressure in the hot line (2) is Pₕₒₜ, then to be able to feed the heating fluid as heated in the heat exchanger (5) into the hot line (2), the first pump (10) needs to generate a higher pressure P1 than Pₕₒₜ. The flow responsive regulator (12) ensures flow only is possible and relatively unhindered from the cold line (3) towards the hot line (2). In one embodiment the flow responsive regulator (12) is a check valve and/or the flow sensor (13) is a flow switch.

Though the flow responsive regulator (12) and flow sensor (13) in figure 1 is illustrated as separate elements, they could alternatively be constructed as a single device.

The flow sensor (13) may be in data exchange communication (21) to a control (20) of said a first pump (10) and/or second pump (11), such as by wire or wireless, where the controller (20) could be integrated e.g. in the flow sensor (13), one of the pumps (10, 11) or other devices, or could be positioned externally.

In one embodiment, the controller (20) is adapted gradually to increase the pumping pressure P1 of the first pump (10) when no flow is registered by the flow sensor (13), until a flow is registered. Alternatively, or additionally, the same procedure could be applied to the pumping pressure P2 of the second pump (11).

This could be used in different ways. In one embodiment a transfer of thermal energy from the thermal storage (4) to the supply (2, 3), a thermal transfer process, is initiated when the storage temperature, Tₛₜₒᵣ, is at some level, e.g. when it is higher than a temperature measured in the hot line (2), Tₕₒₜ, by some defined temperature difference (possible being zero), and / or when the storage temperature, Tₛₜₒᵣ, gets within a given distance of a defined storage temperature threshold. In this, or other embodiments, the system then first initiates the first pump (10) (and/or the second pump (11)) by identifying the lowest possible pumping pressure allowed, P1_{add}, which would ensure the flow could be feed from the heat exchanger (5) to the supply (2, 3), such as to the hot line (2). The lowest possible pumping pressure allowed, P1ₘᵢₙ, in one embodiment is defined as the lowest pressure identified by the flow sensor (13) plus an additional delta pressure, ΔP1_{add}, such that P1ₘᵢₙ covers the expected pressure fluctuations in the supply (2,3) such that the P1_{add} will remains above the expected highest pressure in the supply (2, 3), or in an embodiment in the hot line (2). In one embodiment the additional delta pressure, ΔP1_{add}, is zero.

In an additional, or alternative, embodiment, if the flow sensor (13) registers there to be no flow, even ifa thermal transfer process is expected to be running, then an initialization process as above is started to find a new lowest possible pumping pressure allowed, P1ₘᵢₙ, which thus may be higher than the previous P1ₘᵢₙ to overcome the new pressures in the supply (2, 3), such as the hot line (2).

In an embodiment, the additional delta pressure, ΔP1_{add}, may be a fixed defined amount, or may be defined as a function of the pressures in the supply (2, 3), such as the pressure in the cold line (3) is P_{cold}, or it could be an adaptive process, a PI or PI(D) control etc.

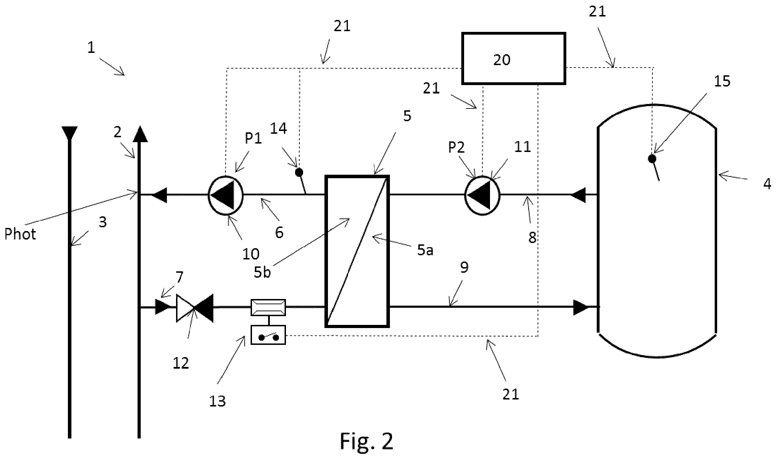

Alternative embodiments include the illustration of fig. 2, where the connection (7) extracts fluid from a first position of the hot line (2) and heats it further in the heat exchanger (2) before feeding it back to a second position of the hot line (2), thus downstream of the first position. In an embodiment, the thermal transfer process could be initiated as when the storage temperature, Tₛₜₒᵣ, is higher than temperature measured in the hot line (2), Tₕₒₜ.

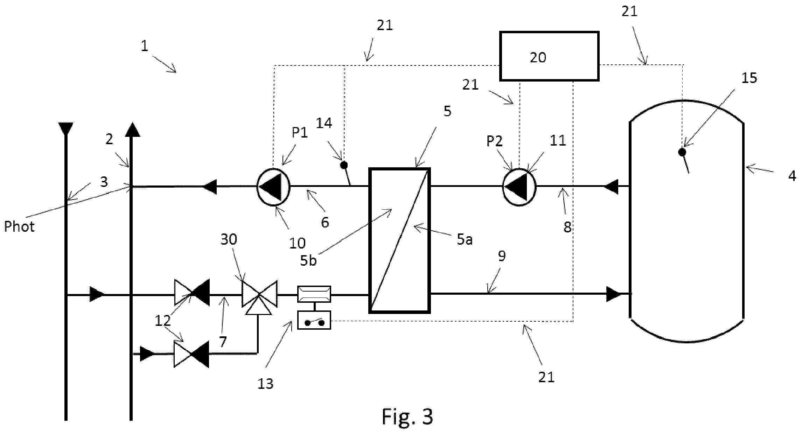

Fig. 3 illustrate a combination of the embodiments of fig. 1 and 2, where the flow connection (7) connects both to the cold line (3) and a first position of the hot line (2), and where flow control means (30), such as a three-way valve as illustrated, is positioned to control the relative flows from respectively the cold line (3) and hot line (3) to the heat exchanger (5). Inlet to the second path (5b) thus in one embodiment could be a mix of these fluids, or it could be either the one or the other. Dependence on the selection of the fluids, or the relative fractions in a mix, then could depend on respectively the storage temperature, Tₛₜₒᵣ, and the temperature measured in the hot line (2), Tₕₒₜ. For example, when Tₛₜₒᵣ, is higher than Tₕₒₜ by some defined difference, the fluid is extracted from the first position at the hot line (2) with no flow from the cold line (3), whereas when between some range below the Tₕₒₜ with some defined difference, the fluid is extracted from the cold line (3). In an alternative embodiment the relation of Tₛₜₒᵣ to Tₕₒₜ instead defines the relative fraction extracted from respectively the hot line (2) and cold line (3).

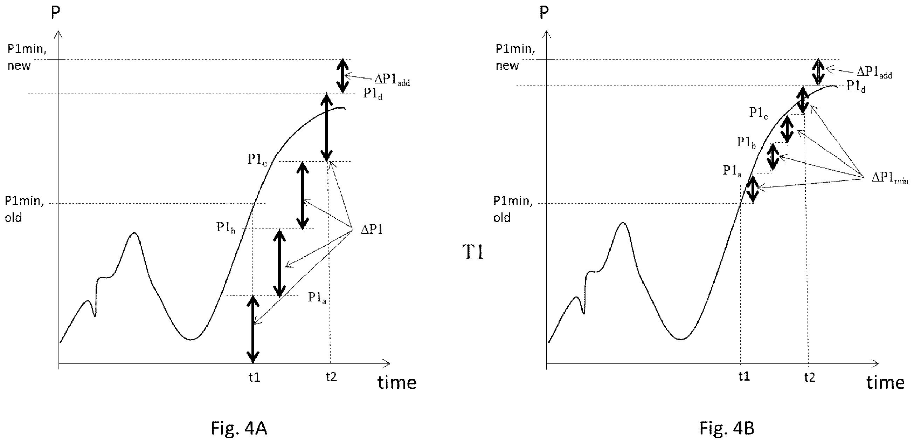

Figs. 4A and 4B illustrate the situation where the pressure in the cold line (3), P_{cold}, fluctuates, where at time t1 it exceeds the presently defined lowest pumping pressure allowed, P1_{min, old}. This then starts an initialization procedure, where a succession, or ramp up, of increases ΔS1 of the first pumping signal S1, corresponding to steps, ΔP1, of first pumping pressures (P1ₐ, P1_{b}, P1_{c}, P1_{d}), is continued, until at the time t2 a flow is registered by the flow sensor (13), thus indicating the pressure is sufficient to feed fluid from the heat exchanger (5) to e.g. the cold line (3). The new lowest e pumping pressure allowed, P1_{min, new}, then is the sum of the first pump (10) pressure P1 at t2 plus the additional delta pressure, ΔP1_{add}, or correspondingly, an additional delta first setting signal ΔS1ₘᵢₙ.

In one embodiment the additional delta pressure, ΔP1_{add}, simply is zero, meaning no additional delta pressure is added.

The above embodiments thus help to reduce the power consumed by the first pump (10). Setting a lowest pumping pressure allowed, P1ₘᵢₙ, ensures not only that the first pump (10) can operate at a relatively low pumping pressure P1, but ensures it does not operate without contributing to the heating, simply by not being able to feed fluid from the heat exchanger (5) to the supply (2, 3).

Fig. 4A show the situation where the ramp up of the first pumping pressure P1 starts from zero, and fig. 4B where it starts from the pending minimum first pumping pressure, P1_{min,old.}

In one embodiment the heating and/or cooling system (1) at regular intervals undergoes similar initialization procedures, e.g. every time the system is started after a stop, every hour, day, week or the like.

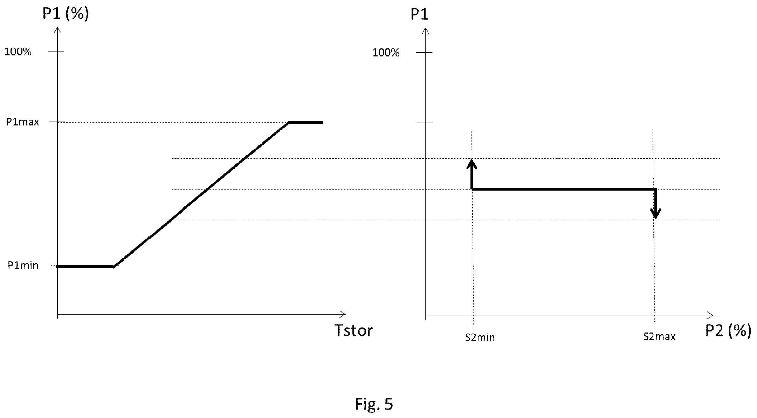

Fig. 5 illustrate a further control of the present heating and/or cooling system (1) to ensure an efficient discharging of the thermal storage (4). The left diagram shows a basic pumping pressure, P1, setting of the first pump (10) as a linear function of the storage temperature, Tₛₜₒᵣ, though higher order equations could also be imagined, or exponential or logarithmic etc. The basic pumping pressure setting of the first pump (10) is a given base level regulation of the first pump (10) dependence on the storage temperature, Tₛₜₒᵣ, which may be established in any manner, such as by testing and measuring, by calculation, by knowing the dimensions and data of the heating and/or cooling system (1) components, like the pipes, valves, pumps (10, 11) etc.

In additional, and on top of the basic pumping pressure setting a control may be introduced in dependence on the measured temperature, Tₕₑₐₜ, of the fluid having been heated in the heat exchanger (5). The second pump (11) is controlled by a regulation dependence Tₕₑₐₜ such as by a feedback control like PI(D) to maintain Tₕₑₐₜ at some defined level. The second pump (11) is set to operate with a setting, S2, being between a minimum second setting signal S2,ₘᵢₙ and a maximum second setting signal S2,ₘₐₓ, corresponding to be between a minimum second pressure, P_{2,min}, and a maximum second pressure P2,ₘₐₓ. If the second pumping setting, S2, (corresponding to second pumping pressure P2, reaches, or gets within a defined distance of the minimum second setting signal, S_{2,min}, the pumping pressure, P1, setting, S1, of the first pump (10) then is increased to a level above the basic pumping pressure setting of the first pump (10), such as by a defined constant addition, or a value depending by some relation to e.g. a temperature like the storage temperature, Tₛₜₒᵣ. Through the feedback control, the second pump (11) then resettles to within limits of the minimum second setting signal, S_{2,min}, and a maximum second setting signal, S2,ₘₐₓ, otherwise the procedure may be iterated a plural times in successions until the return within the range from S2,ₘᵢₙ and S2,ₘₐₓ.(corresponding to between the pressures P2,ₘᵢₙ and P2_{,max} )

In the same manner, if the second pumping setting signal, S2 reaches, or gets within a defined distance of the maximum second setting signal, S2,ₘₐₓ, the first pumping setting signal, S1, setting of the first pump (10) then is decreased to a level below the basic pumping pressure setting of the first pump (10), such as by a defined constant addition, or a value depending by some relation to e.g. a temperature like the storage temperature, Tₛₜₒᵣ. Through the feedback control, the second pump (11) then resettles to within limits of the minimum second setting signal, S2_{,min}, and a maximum second setting signal, S2,ₘₐₓ, otherwise the procedure may be iterated a plural times in successions until the return within the range from S_{2,min} and S2_{,max} (corresponding to between P2_{,min} and P2_{,max}).

In any of these situations it still may be ensured that none of the increases or decreases shifts the first pumping pressure P1 above or below its limits, P1_{,min} and P1_{,max}.

## Claims

1. Heating and/or cooling system (1) comprising a heat exchanger (5) with a first flow path (5a) and a second flow path (5b), a second fluid connection (8,9), a first pump (10), a second pump (11), a flow responsive regulator (12), a flow sensor (13), a hot line (2), a cold line (3) and a first fluid connection (6, 7) connected to the heat exchanger (5) such that
- the supply hot line (2) with a pressure Pₕₒₜ is in fluid connection (6) with an outlet of the second flow path (5b) of the heat exchanger (5)
- the cold line (3) with a pressure P_{cold} is in fluid connection (7) with an inlet of the second flow path (5b) of the heat exchanger (5), said heating system (1) further comprising a thermal storage (4) in second fluid connection (8, 9) with an inlet and outlet of the first flow path (5a) of the heat exchanger (5), **characterized in that** the first pump (10) is connected to the first fluid connection (6, 7) adapted to circulate fluid from the cold line (3), through the second flow path (5b), and to the hot line (2) at a pressure P1, and where the second pump (11) is connected to the second fluid connection (8, 9) adapted to circulate fluid between the first flow path (5a) and the thermal storage (4), and where the aflow responsive regulator (12) is connected to the first fluid connection (6 7) connecting the hot line (2) or cold line (3) to the second flow path (5b), and wherein said flow responsive regulator (12) is adapted only to pass through flow in the direction towards the first flow path (5b) inlet, and the flow sensor (13) sensing when there is a flow in said first fluid connection (6, 7) indicating the pressure P1 of the first pump (10) is higher than the pressure in the hot line (2) or cold line (3) (Pₕₒₜ, P_{cold}).

2. Heating and/or cooling system (1) according to claim 1, wherein the flow responsive regulator (12) is a check valve and / or the flow sensor (13) is a flow switch.

3. Heating and/or cooling system (1) according to claim 2, wherein said flow sensor (13) is configured to be in data exchange communication (21) to a control (20) of said a first pump (10), wherein said control (2) is adapted gradually to increase the pumping pressure when no flow is registered by the flow sensor (13) until a flow is registered.

4. Heating and/or cooling system (1) according to claim 3, wherein the system is configured to insert said registered flow as basis for the new minimum pumping pressure allowed, P1_{min,}, of the first pump (10)

5. Heating system (1) according to any of the claims 1-4, where the second pump (11) is controlled in dependence on the measured temperature, Tₕₑₐₜ, of the fluid having been heated in the heat exchanger (5).

6. Method of operating a heating and cooling system according to claim 1, said method comprising the step of registering if there is a flow in the fluid connection (6, 7), and if no flow is registered to ramp up a first pumping pressure, P1, of said first pump (10) connected to drive said flow in said fluid connection, until a flow is registered indicating the pressure P1 of the first pump (10) is higher than the pressure in the hot line (2) or cold line (3) (Pₕₒₜ, P_{cold})..

7. Method according to claim 6, wherein, if the pressure in the cold line (3), P_{cold}, exceeds a defined lowest possible pumping pressure allowed, P1_{min, old}, then an initialization procedure is started, where a ramp up of increases of the first pumping signal, S1, is continued until a flow is registered by the flow sensor (13).

8. Method according to claim 7, wherein the updated lowest possible pumping pressure allowed, P1_{min, new}, is the sum of the first pump (10) pressure P1 when the flow is registered plus an additional delta pressure, ΔP1ₘᵢₙ, or correspondingly, an additional delta first setting signal ΔS1_{min.}

9. Method according to claim 8, where a second pump (11) is controlled in dependence of a temperature, Tₕₑₐₜ, in said fluid connection (6), where said second pump (11) is connected to the second fluid connection (8, 9) adapted to circulate fluid between the first path (5a) and the thermal storage (4).

10. Method according to claim 9, wherein said second pump (11) is controlled by a regulation dependence Tₕₑₐₜ, by a feedback control like PI or PI(D) to maintain Tₕₑₐₜ at a defined level.

11. Method according to claim 10, wherein the second pump (11) is set to operate with a setting, S2, being between a minimum second setting signal S2,ₘᵢₙ and a maximum second setting signal S2,ₘₐₓ, such that if the second pumping setting, S2, gets within a defined distance of the minimum second setting signal, S_{2,min}, or maximum second setting signal, S_{2,max}, then the first setting, S1, of the first pump (10) is increased, or respectively decreased, to a level respecting the P1min and P1max setting.

## Patentansprüche

1. Heiz- und/oder Kühlsystem (1), einen Wärmetauscher (5) mit einem ersten Strömungsweg (5a) und einem zweiten Strömungsweg (5b), eine zweite Fluidverbindung (8, 9), eine erste Pumpe (10), eine zweite Pumpe (11), einen Strömungsreaktionsregler (12), einen Strömungssensor (13), eine Heißleitung (2), eine Kaltleitung (3) und eine erste Fluidverbindung (6, 7) umfassend, die mit dem Wärmetauscher (5) derart verbunden ist, dass
- die Zufuhrheißleitung (2) mit einem Druck Pₕₒₜ mit einem Auslass des zweiten Strömungswegs (5b) des Wärmetauschers (5) in Fluidverbindung (6) steht,
- die Kaltleitung (3) mit einem Druck P_{cold} mit einem Einlass des zweiten Strömungswegs (5b) des Wärmetauschers (5) in Fluidverbindung (7) steht,
wobei das Heizsystem (1) ferner einen Wärmespeicher (4) in der zweiten Fluidverbindung (8, 9) mit einem Einlass und Auslass des ersten Strömungswegs (5a) des Wärmetauschers (5) umfasst,
**dadurch gekennzeichnet, dass** die erste Pumpe (10) mit der ersten Fluidverbindung (6, 7) verbunden ist, die dazu eingerichtet ist, Fluid von der Kaltleitung (3) durch den zweiten Strömungsweg (5b) und zur Heißleitung (2) mit einem Druck P1 zu zirkulieren, und dass die zweite Pumpe (11) mit der zweiten Fluidverbindung (8, 9) verbunden ist, die dazu eingerichtet ist, Fluid zwischen dem ersten Strömungsweg (5a) und dem Wärmespeicher (4) zu zirkulieren, und dass der Strömungsreaktionsregler (12) mit der ersten Fluidverbindung (6, 7) verbunden ist, die die Heißleitung (2) oder die Kaltleitung (3) mit dem zweiten Strömungsweg (5b) verbindet, und wobei der Strömungsreaktionsregler (12) dazu eingerichtet ist, Strömung nur in die Richtung zum Einlass des ersten Strömungswegs (5b) durchzulassen, und der Strömungssensor (13) erfasst, wenn es eine Strömung in der ersten Fluidverbindung (6, 7) gibt, die angibt, dass der Druck P1 der ersten Pumpe (10) höher als der Druck in der Heißleitung (2) oder Kaltleitung (3) (Pₕₒₜ, P_{cold}) ist.

2. Heiz- und/oder Kühlsystem (1) nach Anspruch 1, wobei der Strömungsreaktionsregler (12) ein Rückschlagventil ist und/oder der Strömungssensor (13) ein Strömungswächter ist.

3. Heiz- und/oder Kühlsystem (1) nach Anspruch 2, wobei der Strömungssensor (13) dazu ausgelegt ist, mit einer Steuerung (20) der ersten Pumpe (10) in Datenaustauschkommunikation (21) zu stehen, wobei die Steuerung (2) dazu eingerichtet ist, den Pumpdruck stufenweise zu erhöhen, wenn vom Strömungssensor (13) keine Strömung erfasst wird, bis eine Strömung erfasst wird.

4. Heiz- und/oder Kühlsystem (1) nach Anspruch 3, wobei das System dazu ausgelegt ist, die erfasste Strömung als Grundlage für den neuen zulässigen Mindestpumpdruck P1ₘᵢₙ der ersten Pumpe (10) einzusetzen.

5. Heizsystem (1) nach einem der Ansprüche 1-4, wobei die zweite Pumpe (11) von der gemessenen Temperatur Tₕₑₐₜ des im Wärmetauscher (5) erhitzten Fluids anhängig gesteuert wird.

6. Verfahren zum Betreiben eines Heiz- und Kühlsystems nach Anspruch 1, wobei das Verfahren den Schritt des Erfassens, ob es eine Strömung in der Fluidverbindung (6, 7) gibt, und falls keine Strömung erfasst wird, einen ersten Pumpdruck P1 der ersten Pumpe (10), die dazu angeschlossen ist, die Strömung in die Fluidverbindung zu bewegen, zu erhöhen, bis eine Strömung erfasst wird, die angibt, dass der Druck P1 der ersten Pumpe (10) höher als der Druck in der Heißleitung (2) oder der Kaltleitung (3) (Pₕₒₜ, P_{cold}) ist, umfasst.

7. Verfahren nach Anspruch 6, wobei, falls der Druck in der Kaltleitung (3) P_{cold} einen definierten niedrigsten zulässigen Pumpdruck P1_{min, old} übersteigt, ein Initialisierungsvorgang gestartet wird, bei dem eine Verstärkung der Erhöhungen des ersten Pumpsignals S1 fortgesetzt wird, bis vom Strömungssensor (13) eine Strömung erfasst wird.

8. Verfahren nach Anspruch 7, wobei der aktualisierte niedrigste zulässige Pumpdruck P1ₘᵢₙ, _{new} die Summe des Pumpdrucks P1 der ersten Pumpe (10), wenn die Strömung erfasst wird, plus ein zusätzlicher Deltadruck ΔP1ₘᵢₙ oder entsprechend ein zusätzliches erstes Deltaeinstellsignal ΔS1ₘᵢₙ ist.

9. Verfahren nach Anspruch 8, wobei eine zweite Pumpe (11) von einer Temperatur Tₕₑₐₜ in der Fluidverbindung (6) abhängig gesteuert wird, wobei die zweite Pumpe (11) mit der zweiten Fluidverbindung (8, 9), die dazu eingerichtet ist, Fluid zwischen dem ersten Weg (5a) und dem Wärmespeicher (4) zu zirkulieren, verbunden ist.

10. Verfahren nach Anspruch 9, wobei die zweite Pumpe (11) durch eine Regelungsabhängigkeit Tₕₑₐₜ durch eine Rückmeldungssteuerung wie PI oder PI(D) gesteuert wird, um Tₕₑₐₜ auf einem definierten Pegel zu halten.

11. Verfahren nach Anspruch 10, wobei die zweite Pumpe (11) dazu eingestellt ist, mit einer Einstellung S2 zu arbeiten, die zwischen einem minimalen zweiten Einstellungssignal S2ₘᵢₙ und einem maximalen zweiten Einstellungssignal S2ₘₐₓ liegt, sodass, falls die zweite Pumpeneinstellung S2 innerhalb eines definierten Abstands des minimalen zweiten Einstellungssignals S2ₘᵢₙ oder maximalen zweiten Einstellungssignals S2ₘₐₓ liegt, die erste Einstellung S1 der ersten Pumpe (10) auf einen Pegel, der die Einstellung für P1ₘᵢₙ und P1ₘₐₓ berücksichtigt, erhöht oder entsprechend verringert wird.

## Revendications

1. Système de chauffage et/ou de refroidissement (1) comprenant un échangeur de chaleur (5) avec un premier chemin de débit (5a) et un second chemin de débit (5b), un second raccordement fluidique (8, 9), une première pompe (10), une seconde pompe (11), un régulateur réactif de débit (12), un capteur de débit (13), une conduite chaude (2), une conduite froide (3) et un premier raccordement fluidique (6, 7) raccordé à l'échangeur de chaleur (5) de telle sorte que
- la conduite chaude d'alimentation (2) avec une pression Pₕₒₜ soit en raccordement fluidique (6) avec une sortie du second chemin de débit (5b) de l'échangeur de chaleur (5),
- la conduite froide (3) avec une pression P_{cold} soit en raccordement fluidique (7) avec une entrée du second chemin de débit (5b) de l'échangeur de chaleur (5), ledit système de chauffage (1) comprenant en outre un stockage thermique (4) en second raccordement fluidique (8, 9) avec une entrée et une sortie du premier chemin de débit (5a) de l'échangeur de chaleur (5), **caractérisé en ce que** la première pompe (10) est raccordée au premier raccordement fluidique (6, 7), adaptée pour faire circuler un fluide depuis la conduite froide (3), à travers le second chemin de débit (5b), et jusqu'à la conduite chaude (2) à une pression P1, et où la seconde pompe (11) est raccordée au second raccordement fluidique (8, 9), adaptée pour faire circuler un fluide entre le premier chemin de débit (5a) et le stockage thermique (4), et où le régulateur réactif de débit (12) est raccordé au premier raccordement fluidique (6, 7) raccordant la conduite chaude (2) ou conduite froide (3) au second chemin de débit (5b), et dans lequel ledit régulateur réactif de débit (12) est adapté seulement pour faire passer un débit de passage dans la direction vers l'entrée du premier chemin de débit (5b), et le capteur de débit (13) détectant l'instant auquel il y a un débit dans ledit premier raccordement fluidique (6, 7) indiquant que la pression P1 de la première pompe (10) est plus élevée que la pression dans la conduite chaude (2) ou conduite froide (3) (Pₕₒₜ, P_{cold}).

2. Système de chauffage et/ou de refroidissement (1) selon la revendication 1, dans lequel le régulateur réactif de débit (12) est un clapet de non-retour et/ou le capteur de débit (13) est un contacteur débitmétrique.

3. Système de chauffage et/ou de refroidissement (1) selon la revendication 2, dans lequel ledit capteur de débit (13) est configuré pour être en communication d'échange de données (21) avec une commande (20) de ladite première pompe (10), dans lequel ladite commande (2) est adaptée pour augmenter progressivement la pression de pompage lorsqu'aucun débit n'est enregistré par le capteur de débit (13) jusqu'à ce qu'un débit soit enregistré.

4. Système de chauffage et/ou de refroidissement (1) selon la revendication 3, dans lequel le système est configuré pour insérer ledit débit enregistré en tant que base pour la nouvelle pression de pompage minimum permise, P1ₘᵢₙ, de la première pompe (10).

5. Système de chauffage (1) selon l'une quelconque des revendications 1 à 4, où la seconde pompe (11) est commandée en dépendance de la température mesurée, Tₕₑₐₜ, du fluide ayant été chauffé dans l'échangeur de chaleur (5).

6. Procédé de fonctionnement d'un système de chauffage et de refroidissement selon la revendication 1, ledit procédé comprenant l'étape de l'enregistrement s'il y a un débit dans le raccordement fluidique (6, 7), et si aucun débit n'est enregistré pour accroître une première pression de pompage, P1, de ladite première pompe (10) raccordée pour entraîner ledit débit dans ledit raccordement fluidique, jusqu'à ce qu'un débit soit enregistré indiquant que la pression P1 de la première pompe (10) est plus élevée que la pression dans la conduite chaude (2) ou conduite froide (3) (Pₕₒₜ, P_{cold}).

7. Procédé selon la revendication 6, dans lequel, si la pression dans la conduite froide (3), P_{cold}, dépasse une pression de pompage possible la plus basse définie permise, P1_{min, old}, alors une procédure d'initialisation est commencée, où un accroissement d'augmentations du premier signal de pompage, S1, est continué jusqu'à ce qu'un débit soit enregistré par le capteur de débit (13).

8. Procédé selon la revendication 7, dans lequel la pression de pompage possible la plus basse mise à jour permise, P1_{min, new}, est la somme de la pression P1 de la première pompe (10) lorsque l'débit est enregistré plus une pression delta supplémentaire, ΔP1ₘᵢₙ, ou de façon correspondante, un premier signal de réglage delta supplémentaire ΔS1ₘᵢₙ.

9. Procédé selon la revendication 8, où une seconde pompe (11) est commandée en dépendance d'une température, Tₕₑₐₜ, dans ledit raccordement fluidique (6), où ladite seconde pompe (11) est raccordée au second raccordement fluidique (8, 9) adapté pour faire circuler un fluide entre le premier chemin (5a) et le stockage thermique (4).

10. Procédé selon la revendication 9, dans lequel ladite seconde pompe (11) est commandée par une dépendance de régulation, Tₕₑₐₜ, par une commande de rétroaction comme PI ou PI(D) pour maintenir Tₕₑₐₜ à un niveau défini.

11. Procédé selon la revendication 10, dans lequel la seconde pompe (11) est réglée pour fonctionner avec un réglage, S2, étant entre un second signal de réglage minimum S2,ₘᵢₙ et un second signal de réglage maximum S2,ₘₐₓ, de telle sorte que, si le second réglage de pompage, S2, est au sein d'une distance définie du second signal de réglage minimum, S2,ₘᵢₙ, ou du second signal de réglage maximum, S2,ₘₐₓ, alors le premier réglage, S1, de la première pompe (10) est augmenté, ou respectivement réduit, jusqu'à un niveau respectant le réglage P1ₘᵢₙ et P1ₘₐₓ.
